**Europäisches Patentamt**

**European Patent Office**

**Office européen des brevets**

(11) Veröffentlichungsnummer: **0 175 904**
**A1**

## (12) EUROPÄISCHE PATENTANMELDUNG

(21) Anmeldenummer: **85110157.6**

(22) Anmeldetag: **13.08.85**

(51) Int. Cl.⁴: **G01F 23/28** , G01F 23/30 , G10K 11/22

(30) Priorität: **29.08.84 DE 3431774**

(43) Veröffentlichungstag der Anmeldung:
**02.04.86 Patentblatt 86/14**

(84) Benannte Vertragsstaaten:
**DE FR IT**

(71) Anmelder: **Siemens Aktiengesellschaft**
**Berlin und München Wittelsbacherplatz 2**
**D-8000 München 2(DE)**

(72) Erfinder: **Dünstl, Josef**
**Von-Ketteler-Strasse 4**
**D-8620 Lichtenfels(DE)**

(54) Vorrichtung zur Messung des Füllstandes von Flüssigkeiten.

(57) Füllstandsmesser für Flüssigkeiten mit einem am unteren Ende eines Schallführungsrohres (12) angebrachten Ultraschallecholotsensor (16). Das Schallführungsrohr (12) kann schräg gestellt sein und es kann ein Schwimmer (15) als Schallreflektor eingebaut sein.

FIG 3

EP 0 175 904 A1

Rank Xerox

## Vorrichtung zur Messung des Füllstandes von Flüssigkeiten

Die Erfindung betrifft eine Vorrichtung zur Messung des Füllstandes von Flüssigkeiten in einem Behälter mittels eines Ultraschallecholotsensors der am unteren Ende eines sich in der Flüssigkeit befindenden Schallführungsrohres, das mit Ausgleichsöffnungen versehen ist, eingebaut ist.

Zur Messung des Füllstandes von Flüssigkeiten können Geräte eingesetzt werden, die nach dem Ultraschallecholotprinzip arbeiten. Ein Sensor am Behälterboden sendet Ultraschallimpulse aus. Das Echo von der Flüssigkeitsoberfläche wird vom Sender wieder aufgenommen. Der Füllstand ist proportional der Schallaufzeit. Der Ultraschallsensor ist am Behälterboden eingebaut.

Gemäß der deutschen Patentanmeldung 3330059 wird der Schall durch eine im Behälter angeordnete Hohlleitung (Schallführungsrohr) geführt. Am unteren Ende des Schallführungsrohres ist der Ultraschallsensor angebracht. Das Rohr befindet sich in der Flüssigkeit und ist über mindestens eine Ausgleichsöffnung soweit mit Flüssigkeit gefüllt, wie es dem Füllstand im Tank entspricht. In dem Schallführungsrohr, das gekrümmt sein kann, wird der Füllstand mit Ultraschall gemessen. Eine solche Ausführungsform soll sich vor allem zur Messung des Füllstandes bei unregelmäßig geformten Flüssigkeitsbehältern eignen. Andere Fakten, wie stark bewegte Flüssigkeitsoberfläche, Schaum auf der Flüssigkeitsoberfläche, oder Schräglage, stören aber immer noch die Messungen. Vielfach ist auch eine Nachrüstung sehr erschwert.

Aufgabe der Erfindung ist es daher, ein Meßgerät der eingangs genannten Art derart weiterzubilden, daß eine schnelle Messung des Füllstandes von Flüssigkeit auch bei schwierigen Einsatzbedingungen, insbesondere auch unter beschränkten Raumverhältnissen zuverlässig möglich ist.

Diese Aufgabe wird bei einer Vorrichtung der eingangs genannten Art mit einem Schallführungsrohr gelöst, das aus einem Stück oder aus Stücken einer bestimmten Länge besteht. Diese sind einfach miteinander verbindbar, z.B. durch Gewindeverschraubung. Sie sind so auf beliebige Füllhöhe anpaßbar. Der Einbau in Tanks bei beengten Raumverhältnissen, z.B. in niedrigen Kellerräumen, wird so erleichtert.

Die erfindungsgemäße Ausführung ist leicht nachrüstbar, was von besonderem Vorteil ist für die Anbringung bei üblichen Tankausführungen, bei denen sich die Einfüllöffnung auf der Tankoberseite befindet. Das Anschlußkabel ist dabei z.B. ebenfalls durch die Einbauöffnung zuzuführen.

Weitere Vorteile der Erfindung liegen darin, daß bei stark schwankender Flüssigkeitsoberfläche sich der Flüssigkeitsspiegel im Schallführungsrohr je nach Größe und Zahl der Ausgleichsöffnungen mehr oder weniger beruhigt, so daß eine einwandfreie Messung durchgeführt werden kann. Die Messung kann auch bei schräg zur Senkrechten angeordneten Meßstrecke erfolgen. Desweiteren wird ein Intensitätsverlust der im Behälter mit großem Durchmesser durch Strahldivergenz erfolgt weitgehend durch streifende Reflektion an der Rohrwand vermieden. Der störende Einfluß von Schaum auf die Oberfläche der Flüssigkeit wird weitgehend ausgeschaltet.

Besonders vorteilhaft erwies sich ein Schallführungsrohr mit Schwimmer als Schallreflektor. Er ermöglicht auch noch bei stark schräg gestelltem Schallführungsrohr eine exakte Messung. Die Anwendung des Meßverfahrens wird auch in komplizierten Behälterformen möglich. Eine solche Ausführung trägt in ganz besonderem Maße zur Niveauberuhigung bei und schaltet den störenden Einfluß von Schaum auf die Oberfläche der Flüssigkeit aus.

Ausführungen gemäß der Erfindung werden mit Vorteil zum Messen des Flüssigkeitsstandes in Benzintanks, Öltanks, Vorratsbehälter für chemische Flüssigeiten etc. eingesetzt.

Im folgenden werden Ausführungsbeispiele der Erfindung anhand der Zeichnung näher erläutert.

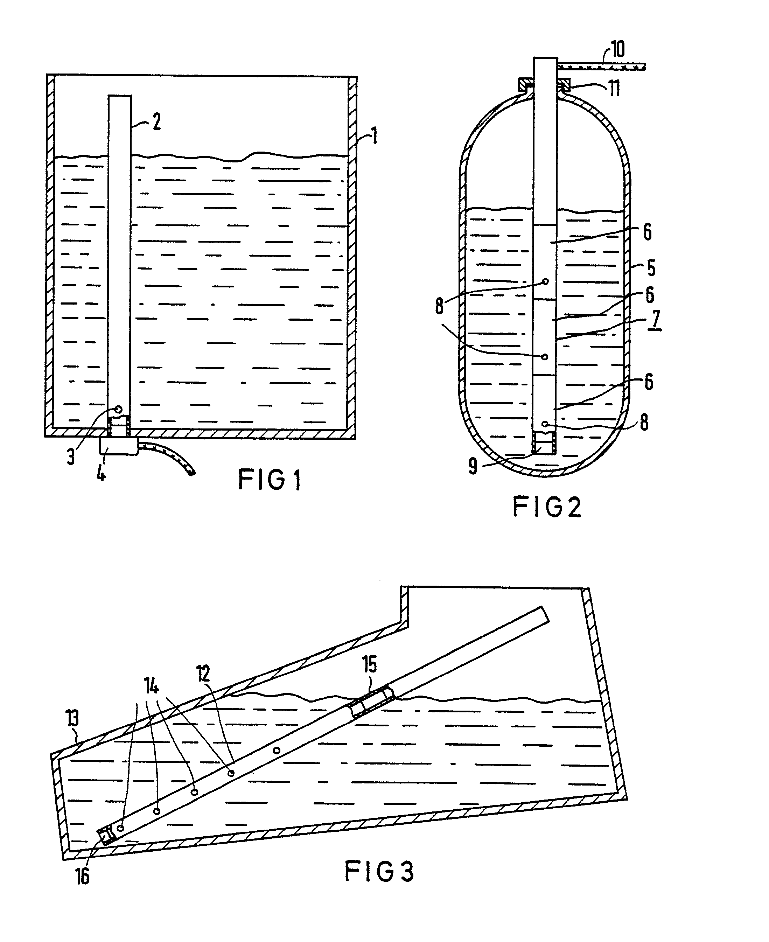

FIG 1 zeigt im Querschnitt ein vertikal in einen rechteckigen geschlossenen Tank 1 eingebautes Schallführungsrohr 2. Mit 3 ist eine Ausgleichsöffnung bezeichnet. Der Ultraschallsensor 4 ist am unteren Ende des durch den Boden des Tanks geführten Schallführungsrohres 2 angeordnet.

FIG 2 zeigt im Querschnitt einen nachrüstbaren Füllstandsmesser. In einem Tank 5 ist ein aus einzelnen Stücken 6 maßgetreu aneinander reihbares Schallführungsrohr 7 eingebaut, das mehrere Ausgleichsöffnungen 8 besitzt. Am unteren Ende des oben im Tank befestigten Schallführungsrohres 7 ist der Ultraschallsensor 9 angeordnet. Der Kabelanschluß 10 ist am oberen Ende. Der Flansch 11 dient zur Befestigung.

FIG 3 zeigt im Querschnitt ein schräg in einen Tank 13 komplizierter Geometrie eingebautes Schallführungsrohr 12. Mit 14 sind die Ausgleichsöffnungen und mit 15 der Schwimmer bezeichnet. Der Ultraschallsensor 16 befindet sich im Tank am unteren Ende des Schallführungsrohres 12. Mit einer solchen Ausführungs form mit schräg gestelltem Schallführungsrohr 12 erhöht sich die Meßgenauigkeit für die absolute Füllhöhe.

**Ansprüche**

1. Vorrichtung zur Messung des Füllstandes von Flüssigkeiten in einem Behälter mittels eines Ultraschallecholotsensors der am unteren Ende eines sich in der Flüssigkeit befindenden Schallführungsrohres, das mit Ausgleichsöffnungen versehen ist, eingebaut ist, **dadurch gekennzeichnet**, daß das Schallführungsrohr (2, 7, 12) aus einem (2, 12) oder mehreren aneinanderfügbaren Teilen (6) besteht und gegebenenfalls schräg gestellt ist.

2. Vorrichtung nach Anspruch 1, **dadurch gekennzeichnet**, daß ein Schwimmer (15) als Schallreflektor eingebaut ist.

FIG 1

FIG 2

FIG 3

## EINSCHLÄGIGE DOKUMENTE

EP 85110157.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US - A - 3 693 445 (JOHNSON)<br>* Spalte 1, Zeilen 24-51; Fig. 1 *<br>-- | 1,2 | G 01 F 23/28<br>G 01 F 23/30<br>G 10 K 11/22 |
| X | DE - B - 1 248 319 (ZA'VODY)<br>* Spalte 1, Zeilen 1-18; Fig. 2,4 *<br>-- | 1,2 | |
| X,P<br>D | DE - A1 - 3 330 059 (SIEMENS)<br>* Fig. 1,2 *<br>-- | 1 | |
| A | US - A - 3 946 831 (BOUYOUCOS)<br>* Fig. 1,2,4,5,7-10; Spalte 2, Zeile 54 - Spalte 3, Zeile 68 *<br>-- | 1 | |
| A | FR - A - 1 028 724 (RICHTER)<br>* Gesamt *<br>-- | | RECHERCHIERTE SACHGEBIETE (Int. Cl. 4) |
| A | DE - B - 1 548 930 (COMMISARIAT)<br>* Fig. 3,4 *<br>---- | 1 | G 01 F 23/00<br>G 01 N 29/00<br>G 10 K 11/00 |

Der vorliegende Recherchenbericht wurde für alle Patentansprüche erstellt.

| Recherchenort | Abschlußdatum der Recherche | Prüfer |
|---|---|---|
| WIEN | 21-11-1985 | GRONAU |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82